# EUROPEAN PATENT SPECIFICATION

(11) **EP 2 727 503 B1**
(45) Date of publication and mention of the grant of the patent: **06.04.2016**
(21) Application number: 14153183.0
(22) Date of filing: 18.04.2011
(51) Int. Cl.: A47J 41/00

(54) **Container with thermal management**
Behälter mit Wärmeverwaltung
Conteneur avec gestion thermique

(30) Priority: 20.04.2010 EP 10160459
(43) Date of publication of application: 07.05.2014
(62) Divisional of application: 11718310.3
(73) Proprietor: Nestec S.A., 1800 Vevey (CH)
(72) Inventor: Cooke, Charles Brian Durler, Herts, Hertfordshire SG8 5TQ (GB); Jarisch, Christian, 1095 Lutry (CH); Palmer, Timothy John, Cambs, Cambridgeshire CB7 5AW (GB); Perentes, Alexandre, 1012 Lausanne (CH); Engelbrecht, Pirow, Melbourn, Royston, Herts SG8 6NG (GB)
(74) Representative: Schnyder, Frank Simon

(56) References cited:
- WO-A1-97/24968
- US-A- 4 322 954

## Description

### Field of the Invention

The present invention concerns an autonomous device for bringing and/or maintaining a body, e.g. a liquid, to and/or at a predetermined temperature. The device may in particular be incorporated into a beverage preparation machine, e.g. a mobile portable machine, in particular a machine for preparing a beverage by circulating a liquid such as water through a capsule containing a flavouring ingredient.

For the purpose of the present description, a "beverage" is meant to include any liquid food, such as tea, coffee, hot or cold chocolate, milk, soup, baby food, etc... A "capsule" is meant to include any pre-portioned beverage ingredient within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Beverage preparation machines have been known for a number of years. For example, US 5,943,472 discloses a water circulation system between a water reservoir and a hot water or vapour distribution chamber of an espresso machine. The circulation system includes a valve, metallic heating tube and pump that are connected together and to the reservoir.

The beverage preparation machine typically includes a housing containing a beverage processing module and a liquid reservoir that is removably connected to the housing and in fluid communication with the beverage processing module. Examples of such beverage preparation machines are disclosed in EP 1 267 687, WO 2009/074553 and WO 2010/015427.

Machines for the preparation of beverages such as coffee which use prepacked or non-packed portions of a beverage flavouring ingredient are very widespread among private individuals, and also in municipalities, shopping centres and companies. The preparation principle is based on the extraction of portions of the beverage by the passage through a corresponding flavouring ingredient of a quantity of cold or hot liquid under high pressure, typically a pressure above atmospheric pressure. The prepacked portions can be supplied within capsules as mentioned above. An example of a cartridge is described in patent EP 0 512 468 B1. An example of a pod is described in patent EP 0 602 203 B1. An example of an extraction method is described in patent EP 0 512 470 B1.

To extract a beverage under pressure from these portions, of the capsule or other type, it is necessary to use a relatively powerful water pump such as an electric compressor and a heater, such as an electric heater, for bringing the liquid to the desired temperature, e.g. between 50 and 100° for tea or coffee. These pumps and heater use the mains for the supply of electric power.

It is therefore difficult to move these preparation apparatuses, such as on a trolley or simply by carrying them. In fact, it would be an advantage to be able to make these apparatuses more mobile so as to offer beverages in locomotion means such as the train, plane, or in certain places such as cinemas, theatres, and also in public places such as beaches, parks, poolsides and other public or private places or any place without access to the mains.

US 6,739,241 discloses a camping drip coffee maker in which a water is promoted from a reservoir to a brewing basket via a tube by heating the tube with an open flame heater to cause pressurisation of the water therein, whereby the boiling/evaporating water is promoted to the brewing basket. Whereas this type of flame heating of the water may prove to be convenient to circulate boiling/evaporated water under the effect of pressure for the purpose of making drip coffee, this heating system is not appropriate to be adapted to prepare an espresso. Indeed, the water which is pumped, usually mechanically, under pressure through ground coffee to prepare an espresso coffee is preferably maintained at a controlled temperature, typically at a temperature within a range of a few degrees around 90°C to prepare a coffee with an in-cup temperature in the range of 85°C to 90°C, e.g. 86 or 87°C.

WO2006/102980 discloses an espresso machine that can be operated to prepare beverages without being connected to an electric power network. The machine is powered with a battery. To avoid extensive use of the battery to heat water used for the preparation of the beverages, the espresso machine has a thermally-insulated reservoir containing water that is preheated using the mains prior to prepare beverages in an autonomous mode. The water is then maintained at a sufficient temperature using the battery in the autonomous mode. The autonomy of such beverage machines can be of a few hours and thus provides a solution when their use is intended within a relatively short period from the time after the water has been preheated, for instance in trains, planes, cinemas... However, this machine is not optimal when intended to be used autonomously several hours.

WO 99/02081 proposes a coffee machine, more precisely a mobile machine, in which the pressure required to extract the ground coffee is generated by compressed air. The water for preparing the coffee is kept in a thermally insulated container. The water can be heated by electric heating elements. This solution offers the advantage of producing the extraction pressure by a self-contained means, such as a gas cylinder, installed under the machine. The machine can be installed on a trolley with the gas cylinder installed in a compartment of the trolley provided for this purpose.

US 2007/0199452 discloses a mobile or portable espresso machine in which water is pumped from a reservoir by means of a pressure gas actuated pump. The water is heated in the reservoir (in which case the reservoir is insulated) or between the reservoir and the machine's extraction head. The espresso machine has either an electric heater, such as a thermoblock, or a combustion heater such as a burner using solid and/or gaseous and/or liquid fuel. WO 2009/092746 discloses an autonomous beverage preparation machine having a dual heating system including an electric heater combined with a combustion heater. More generally, a fuel gas burner that may be used for cooking is disclosed in WO 2007/027379.

EP 1 686 87 discloses a mobile or portable beverage preparation machine having a thermally insulated water reservoir with a capacity for preparing several beverages and a gas-actuated pump to drive the water from the reservoir to a flavouring module. The thermally insulated water reservoir may contain an arrangement to compensate for possible heat loss during use. Such arrangement may include a combustion heater or an electric resistor heater connected to an electric power supply such as a battery, a solar panel or a cigarette lighter.

US 4322952 discloses a portable cooler wherein a heat tube effects heat transfer between a thermal source and a product.

There is still a need to provide an arrangement for accurately controlling the temperature of a container for a body such as a body of liquid, in particular water, especially for mobile, autonomous beverage dispensing applications, e.g. tea or coffee machines.

### Summary of the Invention

A preferred object of the invention is to provide a device for bringing a body, such as a body of liquid, to a predetermined temperature and/or maintaining such body at such temperature.

Another preferred object of the invention is to provide such a device for storing such a body at a predetermined temperature over an extended period of time preferably with an autonomous incorporated energy supply.

A further preferred object of the invention is to provide such a device which has an arrangement for storing a thermal supply used for bringing and/or maintaining said body to and/or at said predetermined temperature in the form of heat or cold, as opposed to electrical energy e.g. batteries.

Therefore, the relates to a thermal storage device according to independent claim 1.

The device thus departs from the idea of providing a thermal heat management in which thermal energy is generated during autonomous use by converting electric energy or a combustible from a portable energy source into thermal energy.

Hence, the device of the invention includes a mass for accumulating thermal energy and delivering the accumulated energy to the container as needed over a time during autonomous use to bring the body, e.g. liquid, contained in the container, to the predetermined temperature and/or to maintain this body in the container at this predetermined temperature, e.g. a constant storage temperature. The thermal autonomy of the device is usually above 0.5 or 1 hour, typically more than three hours and preferably at least 5 to 6 hours and may reach up to 10, 20 or 30 hours, depending on the particular application of the device.

The mass for accumulating thermal energy may be quickly preheated or pre-cooled before use by charging the mass by a resistive heating or another thermal conversion of electricity, e.g. from the mains. The use of high capacity electric batteries or accumulators which are environmentally unfriendly and requiring a long charging time can thus be avoided.

The thermal source may comprise a heating mass arranged to be heated before use for accumulating thermal energy and for transferring during use such thermal energy to the container. Hence, heat can be accumulated in the mass and supplied as required to the body contained in the container. This is particularly indicated for a body that is to be brought or maintained at a temperature significantly higher than the external temperature.

The thermal source may have a cooling mass arranged to be cooled before use and to accumulate during use thermal energy transferred from the container. Hence, heat can be removed from the mass and then the mass is used to draw heat as required from the body contained in the container. This is particularly indicated for a body that is to be brought or maintained at a temperature significantly lower than the external temperature.

In a further embodiment, the thermal source can be dual, e.g. for heating and cooling the body contained in the container. This thermal source may have a heating first mass and a cooling second mass. This is particularly indicated when the external temperature may vary about, i.e. above and below, the temperature to which the body is to be brought and/or maintained.

The thermal source may include an electrically powered thermal conditioner, in particular comprising a resistive heater or an electric heat pump or a peltier cooler or a magnetic refrigerator or any other equivalent means, for heating or cooling the mass electrically before autonomous use and maintaining non-electrically the storage temperature constant during autonomous use. Alternatively, the mass may be thermal charged in an oven or a deep freezer. The autonomy of thermal energy may have to last for a period of time in the range of 1 to 24 hours after electrically heating or cooling the mass, in particular 2 to 12 hours such as 3 to 8 hours. The autonomy will depend on the heat conductivity between inside and outside the container and storage capacity of the container, nature and volume of the body to be stored.

According to the invention, the mass is connected to the device's container via a thermal valve for regulating the thermal transfer between the mass and the container in accordance with the temperature to which the body contained therein should be brought and/or maintained.

The thermal valve includes a thermo-mechanical actuator for controlling thermal communication between the mass and the container via the valve. The thermo-mechanical actuator can be activated by passing a temperature threshold. Typically, the thermo-mechanical actuator can be arranged to change shape and/or volume at activation, the actuator being in particular arranged to change physical state at activation, for instance the thermal actuator melts or solidifies at the temperature threshold. The actuator may include a calibrated wax element with a temperature of change of physical state, e.g. melting and/or solidification, corresponding to the constant storage temperature. Alternatively, another temperature regulator arrangement may be used, in particular another thermostat arrangement in particular including a bimetallic strip.

The thermal valve may have a thermal guide for guiding thermal energy from the mass to the container or vice-versa; and a gate for establishing and interrupting heat transfer via the thermal guide from the mass to the container or vice-versa. The thermal guide may comprise a flexible heat conductor, in particular secured in thermal communication to the mass or to the container, the thermal guide may comprise at least one metallic or metal-based wire or blade, such as a plurality of woven or non-woven wires. Optionally the guide, e.g. wire or blade, is made of at least one of copper and aluminium and alloys thereof. For example, the thermal guide has one part, e.g. one end, fixed in thermal communication to the container and another part, e.g. another end, that is brought selectively in thermal communication and non-communication with the mass as required, or vice-versa (i.e. one part fixed to the mass and another part in selective thermal communication/non-communication with the container). In another example, the thermal guide has both parts in selective communication/non communication with the container and the mass, respectively.

The gate may include a mechanical toggle, such as a pivotable toggle, for bringing the thermal guide into and out of thermal communication from the mass to the container. In particular, the toggle is so biased, e.g. by a spring, to bring the thermal guide into or out of thermal communication from the mass to the container. As for instance discussed above, a thermo-mechanical actuator may be provided in thermal communication with the container and activated by a temperature change thereof for actuating the mechanical toggle so as to bringing the thermal guide into and out of thermal communication from the mass to the container.

Normally, a thermally insulating outer envelope containing the container and optionally the mass is provided. This insulating outer envelope can be generally hermetically sealed around the container and/or have a heat reflective inner surface to contain heat radiation from the container and, when contained therein, from the mass as well. The container may be contained in an insulating outer envelope and the mass may be provided in the form of a separate module, in particular an insulated module, thermally connectable to the container.

The thermally insulating outer envelope may contain the container and the mass, the mass being in particular held by the container spaced apart from the outer envelope via a connecting arrangement, e.g. fixedly and/or rigidly connected bars or rods, having a thermal conductivity which is so low that during use less thermal energy is transferred via said connecting arrangement between the container and the mass than the heat transfer resulting from the gradient between said external temperature and said constant storage temperature. The connecting arrangement may be made of thermally insulating plastic and/or ceramic material. In this case, there is a continuous minimal thermal transfer from the mass to the container and/or vice versa, which can be adjusted by a thermal regulator so that the total thermal transfer between the mass and the container is generally equal to the thermal transfer between the container and the environment external to the device of the invention.

In a variation of the invention, a device is provided for bringing a body, such as a body of liquid, to a predetermined temperature and/or maintaining such body at this temperature. The device comprises: a container for containing this body; a thermal source for adjusting a temperature in the container; and a thermal valve for regulating a thermal transfer from the container to the thermal source and/or vice versa. The valve comprises a thermo-mechanical actuator that is in thermal communication with the container and that is arranged to be activated by passing a temperature threshold corresponding to this predetermined temperature in the container and to control the thermal transfer via the valve. Optionally, the valve comprises a thermal guide for guiding thermal energy from the thermal source to the container or vice-versa and a gate for establishing and interrupting heat transfer via the thermal guide from the thermal source to the container or vice-versa. The thermo-mechanical actuator may comprise a calibrated wax element with a temperature of change of physical state at this temperature threshold.

This device may include any feature or combination of features discussed above, in particular the abovementioned mass.

The invention also relates to a beverage preparation machine, in particular a mobile or portable machine, that comprises a device as described above having a container for containing liquid, in particular water. The machine may include an arrangement for dispensing such a liquid, in particular via an arrangement for mixing the liquid with a flavouring ingredient. Optionally, the dispensing arrangement comprises a pump for pumping the liquid, such as a gas pump. Especially when the machine is mobile or portable, it may include an autonomous energy supply such as an arrangement for being powered by a battery or accumulator. This powering arrangement may be used to power a pump, a control unit such as a PCB with a controller and sensors and/or a user-interface.

For instance, the machine is a coffee, tea, chocolate or soup preparation machine, such as a self-contained machine that can be electrically connected to the mains, e.g. at home or in an office, and/or portable or mobile and associated with a corresponding energy storage for an autonomous use unconnected to an external source of energy.

In particular, the machine is arranged for preparing within the ingredient processing arrangement a beverage by passing hot or cold water or another liquid through a capsule containing an ingredient of the beverage to be prepared, such as ground coffee or tea or chocolate or cacao or milk powder.

For example, the preparation machine comprises: an ingredient processing arrangement including one or more of a liquid reservoir, liquid circulation circuit, a heater that can be activated when the machine is plugged to the mains, a pump and a beverage preparation unit arranged to receive ingredient capsules for extraction and evacuate capsules upon extraction; a housing having an opening leading into a seat to which capsules are evacuated from the preparation unit; and a receptacle having a cavity forming a storage space for collecting capsules evacuated to the seat into the receptacle to a level of fill. The receptacle is insertable into the seat for collecting capsules and is removable from the seat for emptying the collected capsules. Examples of such ingredient processing arrangements are generally disclosed in WO 2009/074550, WO 2009/130099 and WO 2010/015427.

The beverage preparation module may include one or more of the following components:
a) a brewing unit for receiving an ingredient of this beverage, in particular a pre-portioned ingredient supplied within a capsule, and for guiding an incoming flow of liquid, such as water, through said ingredient to a beverage outlet;
b) a heater, such as a resistive heater, for preheating the liquid in the container of the above temperature maintenance device;
c) a pump for pumping this liquid from this container to the brewing unit, in particular a pump that can be powered by a portable battery or accumulator;
d) one or more fluid connecting members for guiding this liquid from a source of liquid, such as a tank of liquid, to the beverage outlet;
e) an electric control unit, in particular a unit that can be powered by a battery or an accumulator, for instance a unit comprising a printed circuit board (PCB), for receiving instructions from a user via an interface and for controlling the in-line heater and the pump; and
f) one or more electric sensors for sensing at least one operational characteristic selected from characteristics of the brewing unit, the in-line heater, the pump, a liquid reservoir, an ingredient collector, a flow of this liquid, a pressure of this liquid and a temperature of this liquid, and for communicating such characteristic(s) to the control unit.

### Brief Description of the Drawings

The invention will now be described with reference to the schematic drawings, wherein:
- Figure 1 shows an autonomous thermal storage device according to the invention from outside;
- Figure 2 is a cross-section view of the device shown in Fig. 1;
- Figure 2a illustrates detail X of the device shown in Fig. 2 in a first configuration;
- Figure 2b illustrates detail Y of the device shown in Fig. 2 in a second configuration; and
- Figure 3 is a perspective view of a thermal valve and actuator of the device illustrated in Figs 1 to 2b.

### Detailed description

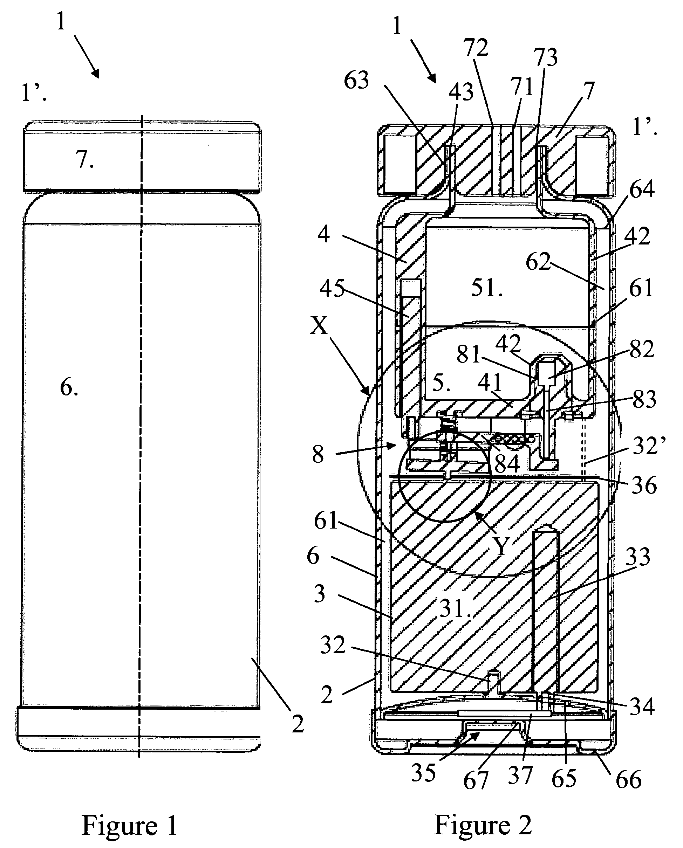

Figures 1 to 3 illustrate a particular embodiment of a thermal storage device 1, such as an autonomous portable device, in particular a vacuum flask device, for storing and maintaining a body 5, such as a body of liquid, at a constant storage temperature different to an external temperature.

Device 1 has main block 2 including a thermal source 3 and a container 4 for containing a body of liquid 5. Thermal source 3 and container 4 are enclosed within an envelope 6 and a lid 7. To ensure thermal insulation of thermal source 3 and container 4, a substantial vacuum is provided in the space 61 between envelope 6 and source 3 as well as container 4. Envelope 6 may have thermo-reflecting inner faces 62 to contain within envelope 6 thermal radiation from source 3 and container 4.

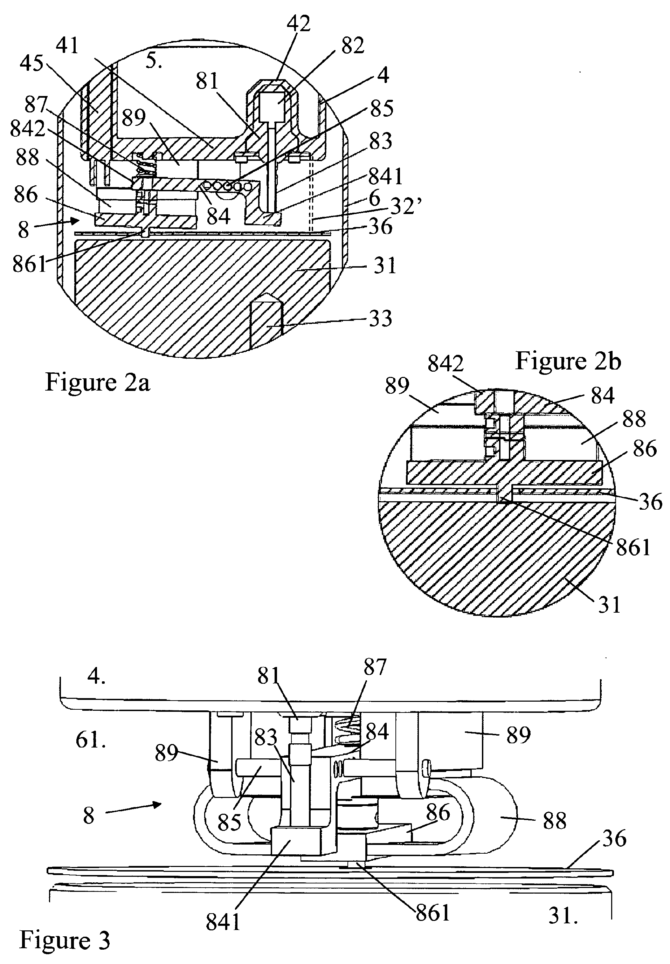

Envelope 6 has a peripheral wall 64 with a top opening 63 formed by a bottleneck of wall 64. Opposite opening 63, envelope 6 has a bottom 65 that may be formed integrally with wall 64 or as a separate element welded to wall 64 or otherwise hermetically sealed. Bottom 65 may have a dome-like shape as illustrated in Fig. 2.

Furthermore, a bottom member 66 secured to wall 64, e.g. by welding or gluing or screwing or equivalent means, forms a foot of device 1.

Container 4 has an opening 43 formed by a bottleneck of container 4 matching opening 63 of envelop 6. Container 4 and envelope 6 are hermetically sealed together, e.g. by welding or gluing or other sealing means, at their respective openings 43,63, one within the other as illustrated in Fig. 2. Hence, outer face 42 of container 4 is covered by vacuum space 61 and sealed off by envelope 6.

Lid 7 is made of thermally insulating material and is fitted on openings 43,63 that have a reduced size compared to the diameter of body 2 for limiting thermal losses at these openings 43,63. Lid 7 has an annular groove 73 in its base face openings 43,63. Groove 73 is force-fitted onto the bottlenecks forming openings 43,63 for securing lid 7 thereon.

The structure of container 4, envelope 6 and lid 7 generally corresponds to the structure of a vacuum flask (or thermos) for containing a body, typically liquid, at a temperature different to the temperature external to device 1.

Lid 7 further includes two small fluid conduits 71,72 connecting the inside of container 4 to the outside 1' of device 1 so that liquid 5 can be accessed from the outside 1' without removal of lid 7. Conduit 71 may for instance secure a pipe (not shown) extending from the outside 1' down into container 4 with its pipe inlet located below the level of liquid 5. Conduit 72 may be connected to an air pump (not shown), e.g. an electric pump, for pressurising the cavity 51 in container 4 above the level of liquid 5 so as to force liquid 5 into the immersed inlet of the pipe and drive liquid 5 out of device 1 via such a pipe by the pressurising action of such a pump. Alternatively, it is also possible to use a tank of compressed air or other gas such as CO2 to pressurise, e. g. via conduit 71, cavity 51 above liquid 5 in container 4 to drive liquid 5 out of device 1, e.g. via the pipe in conduit 72.

In order to maintain the temperature of liquid 5 in container 4 generally constant, thermal source 3 is arranged to compensate heat transfer from container 4 to the outside environment 1', e.g. via lid 7 in particular via conduits 71,72, resulting from the thermal gradient between the external temperature, outside of device 1, and the constant storage temperature. Therefore, thermal source 3 comprises a mass 31 for accumulating thermal energy and for transferring heat from or to container 4 to compensate the heat transfer resulting from the above thermal gradient and thus maintain body 5 at the constant storage temperature during autonomous use.

In the particular embodiment illustrated in the appended Figures, heating mass 31 is arranged to be heated before autonomous use for accumulating thermal energy and for transferring during autonomous use such thermal energy to container 4 as required to maintain the storage temperature of liquid 5 constant and above the temperature of the outside environment 1' of device 1. In an alternative embodiment, the mass may be a cooling mass arranged to be cooled before use and to accumulate during use thermal energy transferred from the container, for example to store chilled drinks or ice cream or other frozen or refrigerated food or beverage in the container.

Thermal source 3 includes an electrically powered thermal conditioner, for example in the form of a resistive heater 33 embedded in mass 31 for heating mass 31 electrically before use and maintaining non-electrically the storage temperature constant during use, optionally for a period of time in the range of 1 to 24 hours after electrically heating or cooling the mass, in particular 2 to 12 hours such as 3 to 8 hours.

Resistive heater 33 has current conductors 34 that extend through bottom 65 and are connected to a control unit 37 which is in turn connected to a power connector formed in a cavity 35 delimited by a recess 67 in foot 66. This power connector may be one side of a disconnectable plug-and-socket type of arrangement, e.g. a Strix™ connector, or one side of an electromagnetic connector, e.g. inductive connector. Control unit 37 is also connected to a temperature sensor (not shown) in thermal connection with mass 31 to control the electric heating of mass 31 before use. For instance, control unit 37 is connected to a user-interface, e.g. a LED arrangement, for indicating the level of thermal charging of mass 31 to a user.

Optionally, when present, resistive heater 45 may also be connected and controlled by control unit 37. Control unit 37 may also be connected to a thermal sensor for sensing the temperature in container 4, e.g. for adjusting the powering of resistive heater 45 before autonomous use or for controlling the heat transfer between mass 31 and container 4 during autonomous use. In the latter case, the thermo-mechanical actuator with valve 8 may be substituted by an electromechanical valve operating with this temperature sensor connected to control unit 37. For such a configuration, a portable electric energy source, e.g. a battery, should be provided for commanding the electromechanical valve and the sensor during autonomous use. The supply of thermal energy, however, may still be stored in mass 31 in the form of thermal energy.

Alternatively, it is also possible to heat the heating mass by an induction heater.

Once mass 31 is appropriately heated, device 1 may be separated from the external power source, e.g. electric power source, and maintain autonomously the storage temperature of liquid 5 by drawing heat from mass 31 and transferring this heat into container 4 as required.

Furthermore, container 4 includes an optional resistive heater 45 for heating liquid 5 in container 4 while device 1 is connected to the external power source, e.g. an electric source such as the mains.

Alternatively, it is possible to feed preheated liquid 5 into container 5 or preheat liquid 5 within container 4 only by means of thermal source 3, i.e. by transferring heat from mass 31 to container 4 while mass 31 is itself heated by resistor heater 33.

To control during use, i.e. when power connector 35 is disconnected, the heat transfer between mass 31 and container 4, mass 31 is connected to container 4 via a thermal valve 8.

Specifically, Fig. 2 shows the general location of valve 8 between container 4 and mass 31. Figs 2a and 2b show enlarged views of details X and Y, respectively, of valve 8 as indicated in Fig. 2. Fig. 2a illustrates valve 8 in a heat-non conducting configuration (i.e. in a closed state) and Fig. 2b illustrates valve 8 in a heat conduction configuration (i.e. in an open state). Fig. 3 illustrates a perspective side view of valve 8 shown in Fig. 2.

Thermal valve 8 includes a thermo-mechanical actuator 81 for controlling thermal communication between mass 31 and the container 4 via the valve 8. Thermal actuator 81 is embedded in a recess 42 of a wall 41 of container 4, outside container thereof, and is in thermal communication with liquid 5 in contact with wall 41. Actuator 81 is activated by passing a temperature threshold which results from thermal communication with liquid 5.

Actuator 81 comprises a chamber 82 containing wax communication with a conduit for a piston 83. The wax in chamber 82 melts on reaching the melting temperature, i.e. the threshold temperature, and expands in chamber 82 and in the communicating conduit for pushing piston 83 outwards in the conduit. The wax is calibrated to melt at a threshold temperature corresponding to the constant temperature of storage of liquid 5 in thermal communication with the wax via wall 41.

Valve 8 further includes a gate member 84 that is pivotally mounted on rod 85 in a middle part of member 84. Rod 85 is secured to a holder structure 89 mechanically connected to container 4 and in thermal communication therewith. A first end 841 of gate member 84 cooperates with piston 83 and a second end 842 of member 84 cooperates with a spring 87, e.g. spring blade or a helical compression or traction spring, for urging first end 841 against piston 83. Hence gate member 84 pivots about rod 85 following displacements of piston 83 in actuator 81.

Second end 842 of member 84 is fixed to a contact member 86 which has a protruding part 861 that can be brought into contact with mass 31 or moved away therefrom by pivoting gate member 84.

Furthermore, a flexible thermal guide 88 connects contact member 86 and holder structure 89 so that when protruding part 861 is in contact with mass 31, container 4 is brought into thermal communication with mass 31 via contact member 86, thermal guide 88 and holder structure 89. For example, thermal guide is made of thermally highly conductive metallic material, such as copper and/or aluminum or alloys thereof. Guide 88 may be formed of a series of woven and/or non-woven wires and/or a series of side-by-side flexible blades.

Hence, when piston 83 telescopes out of actuator 81 under the effect of wax melting and expanding in chamber 82, indicating that liquid 5 is at its constant storage temperature in container 4, gate member 84 is tilted about rod 85 into a position stressing spring 87 and spacing protruding part 861 of contact member 86 away from thermal mass 31 and thus interrupting heat transfer via thermal guide 88 from mass 31 to container 4 whereby heating of liquid 5 in container 4 is interrupted.

Conversely, when wax solidifies and retracts in chamber 82, indicating that liquid 5 in container 4 has passed below the constant storage temperature, piston 83 is moved back into actuator 81 under the effect of spring 87 that relaxes and tilts gate 84 to push piston 83 correspondingly. Simultaneously, contact member 86 with protruding part 861 is pushed under the effect of the relaxing spring 87 against mass 31 thus establishing heat transfer via thermal guide 88 from mass 81 to container 4 to heat up liquid 5 in container 4.

Gate member 84, pivot rod 85 and contact member 86 form a mechanical pivotable toggle for bringing thermal guide 88 into and out of thermal communication from the mass 31 to the container 4 under the effect of spring 87 and actuator 81. It follows that thermo-mechanical actuator 81 is in thermal communication with container 4 and activated by a temperature change thereof for actuating mechanical toggle 84 so as to bringing thermal guide 88 into and out of thermal communication from mass 31 to the container 4.

As illustrated in Fig. 2, mass 31 can be external to container 4. Mass 31 is located in insulating envelope 6. Mass 31 may be supported above bottom 65 via a holding pin 32 extending from bottom 65 into a corresponding recess in mass 31.

Mass 31 may be held by container 4 spaced apart from inner surface 62 of envelope 6. One or more fixing rods 32', one of which is indicated in doted lines in Fig. 2, may secure mechanically mass 31 to container 4. In an embodiment of the invention, mass 31 is held only by rods 32' to prevent any direct contact between envelope 6 and mass 31 that may lead to thermal conduction from mass 31 directly to the outside environment 1' of envelope 6.

Rod(s) 32' which may be made of plastic and/or ceramic material, transfer only a limited amount of thermal energy between container 4 and mass 31. To further limit uncontrolled heat transfer from mass 31 to container 4, a partition wall 36 is provided therebetween to reflect heat radiation from mass 31 back to mass 31. The thermal energy transfer via such rod(s) is smaller that the thermal energy between inside container 4 and the outside environment 1' of device 1. Thermal valve 8 is configured to control the additional heat transfer from mass 31 to container 4 so that liquid 5 is maintained at a constant storage temperature.

The heat transfer between mass 31 and container 4 and thus the storage temperature in container 4, will depend on the melting point of the wax in chamber 82.

In a variation, it is also possible to substitute thermal source 3 with mass 31 that stores positive (heat) or negative (cold) thermal energy by a thermal source that provides positive or negative thermal energy by energy conversion, e.g. electric energy converted into thermal energy on demand as needed to maintain or bring the container containing the body such as a liquid body at or to the predetermined temperature. In this case, a thermal valve is preferably provided for controlling the thermal transfer between the thermal source and the container. As discussed above, such a thermal valve may comprise a thermo-mechanical actuator that is in thermal communication with the container and that is arranged to be activated by passing a temperature threshold corresponding to this predetermined temperature in the container and to control the thermal transfer via the valve. The valve may comprise a thermal guide for guiding thermal energy from the thermal source to the container or vice-versa and a gate for establishing and interrupting heat transfer via the thermal guide from the mass to the container or vice-versa.

The thermal source may include an energy converter that converts non-thermal energy stored within the device, e.g. in the form of electric batteries or accumulators or another energy source, into thermal energy delivered to the container as needed over time to bring the body, e.g. liquid, contained in the container to the predetermined temperature and/or to maintain the this body in the container at this temperature.

The non-thermal energy may typically be stored in the device in the form of electric energy, e.g. within a battery or an accumulator, and be converted into positive or negative thermal energy by a resistor, a heat pump or magnetic cooler, etc...

The thermo-mechanical actuator that is in thermal communication with the container may be arranged to control a switch of the converter of the non-thermal energy into the thermal energy, e.g. an electric switch for powering a resistive heater connected to an electric battery or accumulator.

As discussed above in relation with the appended Figures, the thermo-mechanical actuator may include a calibrated wax element with a temperature of change of physical state at said temperature threshold. The thermo-mechanical actuator may include all the above discussed features.

The device as described in the appended Figures may conveniently be incorporated into a beverage preparation machine, in particular a mobile or portable machine. The container of device may form a source of hot water or cooled water, in particular of water at a temperature in the range of 10 to 100°C for preparing coffee or tea. In particular, the beverage machine may comprise an arrangement for dispensing water from the container, in particular via an arrangement for mixing the water with a flavouring ingredient. The dispensing arrangement may comprise a pump for pumping the water, such as a gas pump and a water outlet pipe connected to the container, for instance as discussed above in relation with numeric references 71,71.

### Example

Mass 31 may be made of aluminium to store positive thermal energy, i.e. heat. Aluminium mass 31 may be heated well above 100°C in order to maintain a constant predetermined storage temperature of e.g. 93°C in the container for maintaining water therein ready at a suitable temperature for coffee brewing.

Therefore, the wax in chamber 82 of actuator 81 has a composition with a melting point of 93°C. Such wax is commercially available, e.g. from Magal Engineering ltd, Dauphinoise Thomson S.A.S. Hence, when the temperature in container 4 exceeds 93°C, the wax that is in thermal communication with container 4 melts and expands in chamber 82 to push piston 83 and pivot toggle end 842 with contact element 86 away from mass 31 whereby thermal conduction between mass 31 and container 4 via thermal valve 81 is interrupted and container 4 is allowed to cool by slow thermal loss towards the outside environment 1' of device 1 especially via lid 7. Conversely, when the temperature in container 4 passes below 93°C, the wax in chamber 82 solidifies allowing retraction of piston 83 by the release of spring 87 whereby toggle end 842 with contact element 86 is pivoted against mass 31 to establish thermal communication from mass 31 to container 4 and transfer heat from mass 31 to container 4 so as to compensate thermal losses especially via lid 7.

Thermal mass 31 is charged with thermal energy by heating resistor 33 connected via control unit 37 (e.g. a PCB with a controller) to the mains. Mass 31 may be heated well above the storage temperature of liquid 5 in container 4 for increasing the autonomy of device 1. Aluminium may be heated up to about 600°C. If a mass 31 with a larger heat storage capacity is needed, it may be made of a different material or alloy, e.g. containing copper.

In the case of a device 1 having a vacuum flask technology of container 4, envelope 7 and lid 4, held at ambient external temperature, e.g. 20°C, configured for maintaining a certain amount of water 5, i.e. 100 to 1000 ml, at 93°C stable over six hours after preheating mass 31 to a certain temperature, i.e. 200 °C to 600°C, the following masses of aluminium 31 can be provided:

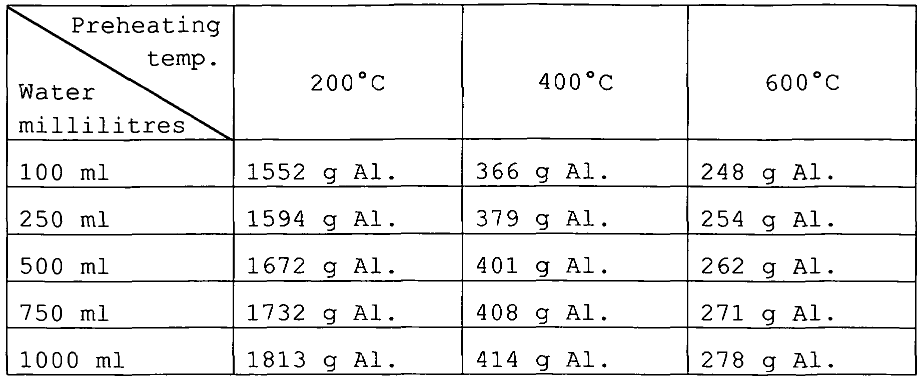

These numeric examples are based on a vacuum flask technology with a typical thermal heat loss of approximately 3 W.

The autonomy of device 1 may be increased by improving its insulation to further reduce temperature losses from container 4 and mass 31 to the outside environment 1' of device 1 or by increasing the thermal storage capacity of mass 31 of the initial heating (or cooling) temperature of mass 31.

## Claims

1. A thermal storage device (1), such as an autonomous device, in particular a vacuum flask device, for storing and maintaining a body (5), such as a body of liquid, at a constant storage temperature different to a temperature external (1') to such device, comprising:
- a container (4) for containing said body at said constant storage temperature; and
- a thermal source (3) for compensating heat transfer resulting from a thermal gradient between said external temperature and said constant storage temperature,
the thermal source comprising a mass (31) for accumulating thermal energy and for transferring heat from or to the container to compensate said heat transfer resulting from said thermal gradient and maintain said body at said constant storage temperature, the mass being in particular external to the container,
**characterized in that** the mass (31) is connected to said inner container (4) via a thermal valve movable between heat conducting and heat-non conducting positions by a thermo-mechanical actuator.

2. The device of claim 1, wherein the thermal source (3) comprises a heating mass (31) arranged to be heated before use for accumulating thermal energy and for transferring during use such thermal energy to the container (4).

3. The device of claim 1 or 2, wherein the thermal source (3) comprises a cooling mass (31) arranged to be cooled before use and to accumulate during use thermal energy transferred from the container (4).

4. The device of any preceding claim, wherein the thermal source (3) comprises an electrically powered thermal conditioner (33), in particular comprising a resistive heater or an electric heat pump or a peltier cooler or a magnetic refrigerator, for heating or cooling the mass (31) electrically before use and maintaining non-electrically said storage temperature constant during use, optionally for a period of time of use in the range of 1 to 24 hours after electrically heating or cooling the mass, in particular 2 to 12 hours such as 3 to 8 hours.

5. The device according to any of the preceding claims, wherein the thermo-mechanical actuator is activated by passing a temperature threshold.

6. The device according to any of the preceding claims, wherein the thermo-mechanical actuator (81,82,83) is arranged to change shape and/or volume at activation, the thermo-mechanical actuator being in particular arranged to change physical state at activation, the actuator comprising in particular a calibrated wax element (82) with a temperature of change of physical state corresponding to said constant storage temperature.

7. The device of any of the preceding claims, wherein the thermal valve (8) comprises:
- a thermal guide (88) for guiding thermal energy from the mass (31) to the container (4) or vice-versa; and
- a gate (84,86) for establishing and interrupting heat transfer via the thermal guide from the mass to the container or vice-versa,
optionally, the thermal guide comprising a flexible heat conductor, in particular secured in thermal communication to the mass or to the container, the thermal guide comprising in particular at least one metallic or metal-based wire or blade, such as a plurality of woven or non-woven wires, optionally made of at least one of copper and aluminium and alloys thereof.

8. The device of claim 7, wherein the gate (84,86) comprises a mechanical toggle (84), such as a pivotable toggle, for bringing the thermal guide (88) into and out of thermal communication from the mass (31) to the container (4), the toggle being optionally so biased, in particular by a spring (87), to bring the thermal guide into or out of thermal communication from the mass to the container.

9. The device of claim 8, which comprises a thermo-mechanical actuator (81) in thermal communication with the container (4) and activated by a temperature change thereof for actuating the mechanical toggle (84) so as to bringing the thermal guide (88) into and out of thermal communication from the mass (31) to the container (4).

10. The device of any preceding claim, which comprises a thermally insulating outer envelope (6) containing the container (4) and optionally the mass (31), the insulating outer envelope being in particular hermetically sealed around the container and/or having a heat reflective inner surface (62) to contain heat radiation from the container and, when contained therein, from the mass.

11. The device of claim 10, wherein the thermally insulating outer envelope (6) contains the container (4) and the mass (31), the mass being held by the container spaced apart from the outer envelope via a connecting arrangement (32') having a thermal conductivity which is so low that during use less thermal energy is transferred via said connecting arrangement between the container and the mass than said heat transfer resulting from the gradient between said external temperature and said constant storage temperature.

12. A beverage preparation machine, in particular a mobile or portable machine, comprising a device (1) having a container (4) for containing liquid (5), in particular water, as defined in any preceding claim.

13. The machine of claim 12, which comprises an arrangement (71,72) for dispensing said liquid (5), in particular via an arrangement for mixing said liquid with a flavouring ingredient, said dispensing arrangement comprising optionally a pump for pumping said liquid, such as a gas pump.

## Patentansprüche

1. Wärmespeichervorrichtung (1), beispielsweise eine autonome Vorrichtung, insbesondere eine Vakuumkolbenvorrichtung, zum Aufbewahren und Halten eines Körpers (5), beispielsweise eines Flüssigkeitskörpers, bei einer konstanten Aufbewahrungstemperatur, die sich von einer Temperatur außerhalb (1') dieser Vorrichtung unterscheidet, umfassend:
- einen Behälter (4) zur Aufnahme des Körpers bei der konstanten Aufbewahrungstemperatur und
- eine Wärmequelle (3) zum Ausgleichen einer Wärmeübertragung, die aus einem Temperaturgefälle zwischen der Außentemperatur und der konstanten Aufbewahrungstemperatur resultiert,
wobei die Wärmequelle eine Masse (31) zum Speichern von Wärmeenergie und zum Übertragen von Wärme von dem oder auf den Behälter umfasst, um die Wärmeübertragung, die aus dem Temperaturgefälle resultiert, auszugleichen und den Körper bei der konstanten Aufbewahrungstemperatur zu halten, wobei sich die Masse insbesondere außerhalb des Behälters befindet,
**dadurch gekennzeichnet, dass** die Masse (31) mit dem Innenbehälter (4) über ein Thermoventil verbunden ist, das durch ein thermomechanisches Stellglied zwischen Positionen, an denen Wärme geleitet und an denen Wärme nicht geleitet wird, bewegbar ist.

2. Vorrichtung nach Anspruch 1, wobei die Wärmequelle (3) eine Heizmasse (31) umfasst, die dafür ausgelegt ist, vor Gebrauch erwärmt zu werden, um Wärmeenergie zu speichern und um diese Wärmeenergie bei der Anwendung auf den Behälter (4) zu übertragen.

3. Vorrichtung nach Anspruch 1 oder 2, wobei die Wärmequelle (3) eine Kühlmasse (31) umfasst, die dafür ausgelegt ist, vor Gebrauch gekühlt zu werden und um bei der Anwendung Wärmeenergie zu speichern, die vom Behälter (4) übertragen wird.

4. Vorrichtung nach einem der vorangehenden Ansprüche, wobei die Wärmequelle (3) eine elektrisch angetriebene thermische Konditionierungseinrichtung (33) umfasst, die insbesondere eine Widerstandsheizung oder eine elektrische Wärmepumpe oder einen PeltierKühler oder einen magnetischen Kühler umfasst, um die Masse (31) vor dem Gebrauch elektrisch zu erwärmen oder zu kühlen und um die Aufbewahrungstemperatur bei der Anwendung auf nicht elektrische Weise, optional für einen Nutzungszeitraum im Bereich von 1 bis 24 Stunden, insbesondere von 2 bis 12 Stunden, wie etwa 3 bis 8 Stunden, nach dem elektrischen Aufwärmen oder Kühlen der Masse konstant zu halten.

5. Vorrichtung nach einem der vorangehenden Ansprüche, wobei das thermomechanische Stellglied durch Durchschreiten eines Temperaturschwellenwerts aktiviert wird.

6. Vorrichtung nach einem der vorangehenden Ansprüche, wobei das thermomechanische Stellglied (81, 82, 83) dafür ausgelegt ist, bei Aktivierung seine Form und/oder sein Volumen zu ändern, wobei das thermomechanische Stellglied insbesondere dafür ausgelegt ist, bei Aktivierung seinen physikalischen Zustand zu ändern, wobei das Stellglied insbesondere ein kalibriertes Wachselement (82) umfasst, wobei eine Temperatur, bei der sich der physikalische Zustand ändert, der konstanten Aufbewahrungstemperatur entspricht.

7. Vorrichtung nach einem der vorangehenden Ansprüche, wobei das Thermoventil (8) umfasst:
- eine Wärmeführungseinrichtung (88), um Wärmeenergie von der Masse (31) zum Behälter (4) oder umgekehrt zu führen, und
- eine Schranke (84, 86) zum Herstellen und Unterbrechen einer Wärmeübertragung über die Wärmeführungseinrichtung von der Masse zum Behälter oder umgekehrt,
wobei die Wärmeführungseinrichtung optional einen flexiblen Wärmeleiter umfasst, der insbesondere fest in thermischer Verbindung mit der Masse oder dem Behälter gehalten wird, wobei die Wärmeführungseinrichtung insbesondere mindestens eine(n) Metall- oder auf Metall basierende(n) Draht oder Klinge umfasst, beispielsweise eine Vielzahl von verflochtenen oder nichtverflochtenen Drähten, die optional entweder aus Kupfer oder Aluminium oder beidem und deren Legierungen bestehen.

8. Vorrichtung nach Anspruch 7, wobei die Schranke (84, 86) einen mechanischen Umschalter (84), beispielsweise einen drehbaren Umschalter umfasst, um eine thermische Verbindung von der Masse (31) zum Behälter (4) über die Wärmeführungseinrichtung (88) herzustellen und zu unterbrechen, wobei der Umschalter optional so vorgespannt ist, insbesondere durch eine Feder (87), dass er eine thermische Verbindung von der Masse zum Behälter über die Wärmeführungseinrichtung herstellt oder unterbricht.

9. Vorrichtung nach Anspruch 8, die ein thermomechanisches Stellglied (81) umfasst, das mit dem Behälter (4) in thermischer Verbindung steht und von einer Temperaturänderung desselben aktiviert wird, um den mechanischen Umschalter (84) zu betätigen, um eine thermische Verbindung der Wärmeführungseinrichtung (88) von der Masse (31) zum Behälter (4) herzustellen und zu unterbrechen.

10. Vorrichtung nach einem der vorangehenden Ansprüche, die eine wärmeisolierende äußere Hülle (6) umfasst, die den Behälter (4) und optional die Masse einschließt, wobei die isolierende äußere Hülle insbesondere um den Behälter herum hermetisch abgedichtet ist und/oder eine wärmereflektierende innere Fläche (62) aufweist, um eine Wärmestrahlung vom Behälter und, wenn diese darin enthalten ist, von der Masse einzuschließen.

11. Vorrichtung nach Anspruch 10, wobei die wärmeisolierende äußere Hülle (6) den Behälter (4) und die Masse (31) einschließt, wobei der Behälter die Masse von der äußeren Hülle beabstandet hält über eine Verbindungsanordnung (32') mit einer Wärmeleitfähigkeit, die so gering ist, dass im Gebrauch weniger Wärmeenergie über die Verbindungsanordnung zwischen dem Behälter und der Masse übertragen wird als bei der Wärmeübertragung, die ein Ergebnis des Gradienten zwischen der Außentemperatur und der konstanten Aufbewahrungstemperatur ist.

12. Getränkeherstellungsmaschine, insbesondere eine mobile oder tragbare Maschine, die eine Vorrichtung (1) mit einem Behälter (4) zur Aufnahme einer Flüssigkeit (5), insbesondere Wasser, nach einem der vorangehenden Ansprüche umfasst.

13. Maschine nach Anspruch 12, die eine Anordnung (71, 72) zum Abgeben der Flüssigkeit (5) umfasst, insbesondere über eine Anordnung zum Mischen der Flüssigkeit mit einem aromatisierenden Inhaltsstoff, wobei die Abgabevorrichtung optional eine Pumpe zum Pumpen der Flüssigkeit, beispielsweise eine Gaspumpe umfasst.

## Revendications

1. Dispositif de stockage thermique (1), tel qu'un dispositif autonome, en particulier un dispositif de flacon isolant, destiné au stockage et au maintien d'un corps (5), tel qu'un corps de liquide, à une température constante de stockage différente d'une température externe (1') à un tel dispositif, comprenant :
- un récipient (4) destiné à contenir ledit corps à ladite température constante de stockage ; et
- une source thermique (3) destinée à compenser le transfert de chaleur résultant d'un gradient thermique entre ladite température externe et ladite température constante de stockage,
la source thermique comprenant une masse (31) destinée à accumuler l'énergie thermique et à transférer la chaleur depuis ou vers le récipient pour compenser ledit transfert de chaleur résultant dudit gradient thermique et maintenir ledit corps à ladite température constante de stockage, la masse étant, en particulier, externe au récipient,
**caractérisé en ce que** la masse (31) est reliée audit récipient interne (4) par l'intermédiaire d'une soupape thermique déplaçable entre des positions conductrice de chaleur et non conductrice de chaleur par un actionneur thermo-mécanique.

2. Dispositif selon la revendication 1, dans lequel la source thermique (3) comprend une masse chauffante (31) disposée pour être chauffée avant utilisation pour accumuler l'énergie thermique et pour transférer, durant l'utilisation, une telle énergie thermique au récipient (4).

3. Dispositif selon la revendication 1 ou 2, dans lequel la source thermique (3) comprend une masse de refroidissement (31) disposée pour être refroidie avant utilisation et pour accumuler, durant l'utilisation, l'énergie thermique transférée du récipient (4).

4. Dispositif selon l'une quelconque des revendications précédentes, dans lequel la source thermique (3) comprend un conditionneur thermique alimenté électriquement (33), comprenant en particulier un chauffage à résistance ou une pompe à chaleur électrique ou un refroidisseur à effet Peltier ou un réfrigérateur magnétique, destiné à chauffer ou refroidir la masse (31) électriquement avant utilisation et à maintenir non électriquement ladite température de stockage constante durant l'utilisation, éventuellement pendant une période de temps d'utilisation de l'ordre de 1 à 24 heures après chauffage ou refroidissement électrique de la masse, en particulier 2 à 12 heures, telle que 3 à 8 heures.

5. Dispositif selon l'une quelconque des revendications précédentes, dans lequel l'actionneur thermo-mécanique est activé en passant un seuil de température.

6. Dispositif selon l'une quelconque des revendications précédentes, dans lequel l'actionneur thermo-mécanique (81, 82, 83) est disposé pour changer de forme et/ou de volume à l'activation, l'actionneur thermo-mécanique étant en particulier disposé pour changer d'état physique à l'activation, l'actionneur comprenant en particulier un élément en cire étalonné (82) avec une température de changement d'état physique correspondant à ladite température constante de stockage.

7. Dispositif selon l'une quelconque des revendications précédentes, dans lequel la soupape thermique (8) comprend :
- un guide thermique (88) pour guider l'énergie thermique de la masse (31) au récipient (4) ou inversement ; et
- une porte (84, 86) pour établir et interrompre un transfert de chaleur par l'intermédiaire du guide thermique de la masse au récipient ou inversement,
éventuellement, le guide thermique comprenant un conducteur de chaleur souple, fixé en particulier en communication thermique à la masse ou au récipient, le guide thermique comprenant en particulier au moins un fil ou une lame métallique ou à base de métal, tel qu'une pluralité de fils tissés ou non tissés, éventuellement constitués d'au moins un matériau parmi le cuivre et l'aluminium et leurs alliages.

8. Dispositif selon la revendication 7, dans lequel la porte (84, 86) comprend un inverseur mécanique (84), tel qu'un inverseur pivotant, pour amener le guide thermique (88) en ou hors communication thermique de la masse (31) au récipient (4), l'inverseur étant éventuellement sollicité, en particulier par un ressort (87), de façon à amener le guide thermique en ou hors communication thermique de la masse au récipient.

9. Dispositif selon la revendication 8, qui comprend un actionneur thermo-mécanique (81) en communication thermique avec le récipient (4) et activé par un changement de température de celui-ci pour actionner l'inverseur mécanique (84), de façon à amener le guide thermique (88) en et hors communication thermique de la masse (31) au récipient (4).

10. Dispositif selon l'une quelconque des revendications précédentes, qui comprend une enveloppe externe thermiquement isolante (6) contenant le récipient (4) et éventuellement la masse (31), l'enveloppe externe isolante étant en particulier hermétiquement scellée autour du récipient et/ou possédant une surface interne (62) réfléchissant la chaleur pour contenir le rayonnement thermique provenant du récipient et, lorsqu'elle y est contenue, de la masse.

11. Dispositif selon la revendication 10, dans lequel l'enveloppe externe thermiquement isolante (6) contient le récipient (4) et la masse (31), la masse étant maintenue par le récipient à distance de l'enveloppe externe par l'intermédiaire d'un agencement de liaison (32') possédant une conductivité thermique qui est si basse que, durant l'utilisation, moins d'énergie thermique est transférée par l'intermédiaire dudit agencement de liaison entre le récipient et la masse que ledit transfert de chaleur résultant du gradient entre ladite température externe et ladite température constante de stockage.

12. Machine de préparation de boisson, en particulier une machine mobile ou portative, comprenant un dispositif (1) comportant un récipient (4) pour contenir un liquide (5), en particulier de l'eau, selon l'une quelconque des revendications précédentes.

13. Machine selon la revendication 12, qui comprend un agencement (71, 72) pour distribuer ledit liquide (5), en particulier par l'intermédiaire d'un agencement pour mélanger ledit liquide avec un ingrédient aromatisant, ledit agencement de distribution comprenant éventuellement une pompe pour pomper ledit liquide, telle qu'une pompe à gaz.
